# EUROPEAN PATENT SPECIFICATION

(11) **EP 2 974 604 B1**
(45) Date of publication and mention of the grant of the patent: **11.10.2017**
(21) Application number: 15461538.9
(22) Date of filing: 11.06.2015
(51) Int. Cl.: A23D 9/02, C11C 3/10, C11C 3/00

(54) **A PROCESS FOR PRODUCING A MIXTURE OF ETHYL ESTERS OF VEGETABLE FATTY ACIDS WITH A HIGH CONTENT OF CIS ISOMERS**
VERFAHREN ZUR HERSTELLUNG EINER MISCHUNG VON ETHYLESTERN VON PFLANZLICHEN FETTSÄUREN MIT EINEM HOHEN GEHALT AN CIS ISOMERE
PROCÉDÉ DE PRODUCTION D'UN MÉLANGE D'ESTERS ÉTHYLIQUES D'ACIDES GRAS VÉGÉTAUX AVEC UNE TENEUR ÉLEVÉE EN CIS ISOMERES

(30) Priority: 11.06.2014 PL 40850914
(43) Date of publication of application: 20.01.2016
(73) Proprietor: Skotan S.A., 41-506 Chorzow (PL)
(72) Inventor: Harasym, Joanna, 55-010 Radwanice (PL); Baszczok, Malgorzata, 44-230 Belk (PL); Marycz, Krzysztof, 55-100 Trzebnica (PL)
(74) Representative: Witek, Rafal

(56) References cited:
- EP-A1- 1 685 222
- WO-A1-2007/061325
- WO-A1-2009/020725
- LORENTE-CEBRIÁN SILVIA ET AL: "Role of omega-3 fatty acids in obesity, metabolic syndrome, and cardiovascular diseases: a review of the evidence", JOURNAL OF PHYSIOLOGY AND BIOCHEMISTRY, SPRINGER NETHERLANDS, NL, vol. 69, no. 3, 22 June 2013 (2013-06-22), pages 633-651, XP035327963, ISSN: 1138-7548, DOI: 10.1007/S13105-013-0265-4 [retrieved on 2013-06-22]

## Description

The present invention relates to a method of producing a mixture of ethyl esters of plant fatty acids with a high content of cis- isomers of unsaturated fatty acids, according to claim 1 (meaning a mixture of ethyl esters of plant fatty acids with a content of cis- isomers of omega fatty acids amounting to at least 95% of the initial cis-isomer content of unsaturated fatty acids: omega 3, omega 6 or omega 9 in the plant oil used for producing these esters, according to claim 4). There are known dietary supplements containing plant and animal oils (particularly from fish) containing omega 3, omega 6 and omega 9 fatty acids.
Known health promoting properties are possessed by natural shark, cod and other fish liver oils. However, due to the specific smell and taste of these, their relatively short shelf-life and limited availability, their utility in the manufacture of nutraceuticals is limited.
Natural omega fatty acids lose their activity during processing and storage, as they become oxidised.
Polish patent applications P-378114, P-386610 and P-386608 relate to a method of producing health-promoting fatty acids from linseed oil.
Ethyl esters of natural unsaturated fatty acids have been found to be particularly useful in diet supplementation, as they have a higher bioavailability in relation to triglycerides evaluated so far and a stronger anti-atherosclerotic and anti-arrythmogenic properties.
In accordance to the position of the European Food Safety Authority / European Food Safety Authority, 2008 Draft consolidated list of Health Claims / a diet containing a proper ratio of ω-6 to w-3 acids supports a series of health promoting activities. The proper ratio promotes cardiac muscle functioning, normalises blood pressure, have anticoagulant activity, counteract atherosclerosis, reduce triglyceride levels and thereby help maintain proper cholesterol levels and help fat metabolism, have a positive effect on cognitive functions, protect the circulatory system at the cellular level, are essential for macular functioning, exhibit anti-inflammatory, antiallergenic and antidepressant activity, counteract obesity, as well as ensuring the proper development and functioning of the brain.

Thus, to obtain a product with desirable properties, it is necessary to supply a mixture of ethyl esters of various unsaturated fatty acids obtained from various natural oils, particularly plant oils.
The desirable biological activity of unsaturated fatty acids is also affected by its conformation. It is particularly beneficial to use cis- isomers, which occur in natural unsaturated fatty acids. In the case of omega-9 acids, the trans- isomer may induce deleterious effects. Unfortunately, known processes of producing mixtures of the ethyl esters of unsaturated fatty acids from natural oils lead to undesirable isomerisation and increased amounts of undesirable trans- isomers at the expense of a decreased beneficial cis- isomer content.

The goal of the present invention is to deliver a method of obtaining a dietary supplement with desirable health promoting properties composed of a mixture of ethyl esters obtained from a mixture of various natural unsaturated fatty acids contained in various plant oils. At the same time, it's desirable to deliver such a process of producing esters that would make it possible to maintain a high cis-isomer content of unsaturated fatty acids in the ethyl ester mixture produced.

Unexpectedly, such stated problems have been resolved by the present invention.

The subject of the present invention is a method of producing a mixture of ethyl esters of plant fatty acids with a high content of cis- isomers of unsaturated fatty acids, characterised in that:
a. a homogenous mixture of plant oils is produced using a flow cavitation technique, wherein the cavitation is conducted in a flow cavitator possessing from 3 to 8 cavitation zones,
b. the resulting mixture is used as a feedstock in the transesterification reaction with ethanol, wherein the transesterification is conducted in presence of a catalyst at a temperature below 49°C, at atmospheric pressure in a molar excess of alcohol in relation to triglycerides, preferably from 13- to 16-fold,
c. after completing the transesterification reaction the reaction mixture is freed of ethanol by evaporation, wherein the evaporation process is conducted at a temperature not exceeding 49°C over a time below 0.3 hours, preferably in a dome evaporator equipped with spray nozzles with vapour diffusers,
d. the ester phase is separated and purified, particularly of the remaining a catalyst, soap and glycerine, and then the purified mixture of plant fatty acid ethyl esters with a high content of cis- isomers of unsaturated fatty acids is clarified.
Preferably, the transesterification reaction is conducted in in a flow-through process cavitator in a 13-fold excess of ethanol.
Preferably, in the transesterification reaction, KOH is used as the catalyst.
The method according to the present invention is designed for producing nutraceuticals (of ethyl esters), wherein particularly preferably the entire process temperature oscillates around 40°C and t no point exceeds 49°C.

The next subject of the present invention is a mixture of ethyl esters of plant fatty acids with a content of cis- isomers of omega fatty acids of at least 95% of the initial cis-isomer content of unsaturated omega 3, omega 6 or omega 9 fatty acids in the plant oil used to produce the esters.

Example 1. A method of producing a mixture of ethyl esters of plant fatty acids with a high content of cis- isomers of unsaturated fatty acids.

During the entire process, one should adhere to known prior art techniques and rules for the processing of mono- and poly-unsaturated acids (settlement chambers, chillers, darkness, nitrogen padding). Aside from the exceptions mentioned herein, this also pertains to the conditions for conducting the fatty acid ester reactions (ethanol, KOH, evaporators, loading methods). At all points of the installation in which there was a risk of contact: of moisture-sensitive reagents (i.e. 99.9% ethanol) or moisture and carbon dioxide (i.e. KOH), or oxygen-sensitive products (oils and their mixtures, esters) we used a dry gaseous nitrogen atmosphere generated from liquid N₂.

Compendium of the fundamental physical and chemical characteristics of selected oils for the production of a nutraceutical:

| Type of oil | Main components | Specific gravity | Iodine number |
|---|---|---|---|
| Evening primrose seed oil | cis-linoleic acid (LA) - 73,5-81,9%, gamma-linolenic acid (GLA) - 6,8-9,4% and oleic acid - 4,7-10,7%. The content of other acids, particularly saturated ones, including palmitic (5,0-6,7%) and stearic acid (1,1-2,9%) | 0,915 - 0,935 g/ml. | 130-200 % l |
| | It also contains saponins, polyphenols, and glycolipids. | | |
| Borage oil | Drying oil | | |
| | Contains 18-25% gammalinolenic acid (GLA), rich in flavonoids (quercetine, isoramnetine, kaemferol), tannins, mucus, and also contains linoleic (38%), eicosenoic(4%), docosanoic (3%) acid (ascorbic, maleic, citric), mineral salts and saponins. | 0,900 - 0,940 g/ml | 135-175% l |
| Blackcurrant oil | Contains over 80% polyunsaturated fatty acids | | |
| | Contains other fatty acids: linoleic acid (LA) alpha-linolenic acid (ALA), and, moreover the rare stearic acid (SDA). | 0,910 g/ml | 145-185% l |
| | It also contains 1,5%-2,5% phytosterols and tocopherols. | | |
| Linseed oil | Drying oil. | | |
| | Contains over 50% linoleic acid (omega-3), 15% linolenic acid (omega-6), 15% oleic acid (omega-9) as well as slight amounts of saturated fatty acids | ok. 0,931 g/ml | 160-200 l |

In the example embodiment we used a mixture of plant oils with the following composition as a feedstock:
night primrose oil (Oenothera L.) (from 1 % to 30 %)
borage oil (Borago officinalis L.) (from 1 % to 30 %)
blackcurrant seed oil (Ribes nigrum L.) (from 1 % to 10 %)
linseed oil (Linum L.) to 100 % by mass in various quantitative combinations of the above percentage proportions.

The quality of the resulting product is also affected by the appropriate transport and storage conditions of the raw materials. The feedstocks and products should be kept in the dark (particularly out of UV light). Oil producers should use cold pressing techniques or extraction with liquid CO₂, and clarification should proceed via sedimentation (slow process, varying degrees of completion between the oils) and thus the oil mass for mixing may contain even plant debris (plant microparticles, organic matter, etc.). The transported oils should be secured with a nitrogen pad under controlled temperature and light conditions.

### Obtaining a mixture of oils

The basic requirements for the mixer/mixers are: complete homogenisation of the oil mass meant for esterification, and retention of at least 95% ci isomers contained in the component oils.

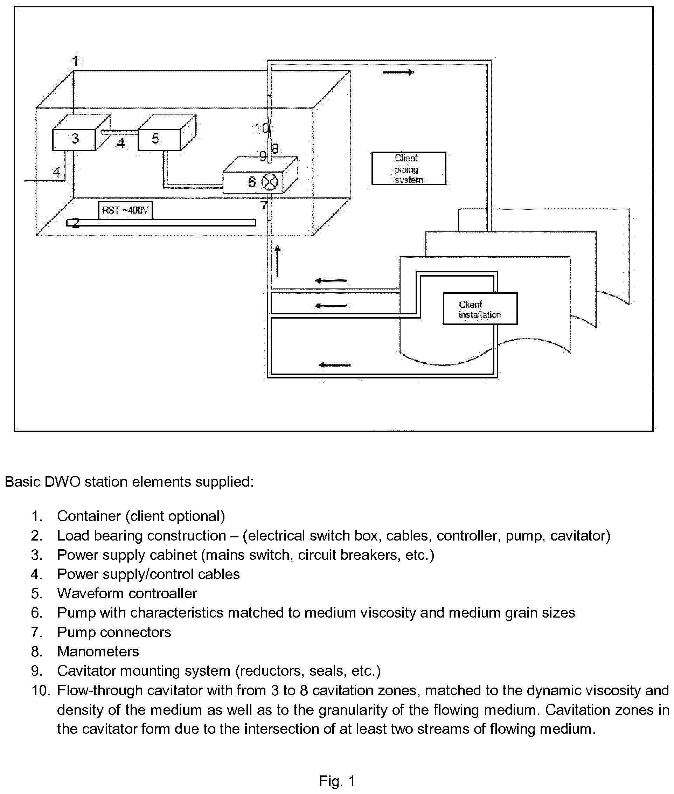

According to the present invention, the oils were mixed in a flow cavitator possessing from 3 to 8 cavitation zones. In the example embodiment we used a DWO station on a KAS 3 by Unister Plus Miros 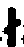 aw Pytlik (for schematics see Fig. 1). Mixing using a flow cavitator made it possible to produce a homogenous mixture of oils independently of the percentage composition. In each instance, the resulting mixture was clear and did not stratify even during an extended storage trial. Furthermore, we achieved the retention of over 95 % of the cis-isomers. Each batch of esters from such a mixture was successfully obtained.

For comparison reasons, we conducted trials to obtain mixtures of raw oils via alternative methods. We conducted the comparisons using mechanical mixers (frame, spinning bit and drum mixers). We performed test mixes, and visually inspected the oils and determined that after several days' storage, the mixture clouds over, stratifies and forms a floating scum layer on top. Esterification attempts on such oils in general ended up with the transesterification stalling.

We also performed a comparative mixing using sonic cavitation (Hielscher Ultrasonics). In the trials we noted the complete homogeneity of the mixture (no stratification), but during the mixing we lost a substantial proportion of the cis- isomers contained in the oils (spontaneous isomerisation to trans isomers).

### Batch esterification of the homogenised oil mass

In the example embodiment, ester production is batch-based, wherein in order to optimise the efficiency we used a sequential organisation of the ester synthesis process through the introduction of two alternating reactors and the selection of appropriate stage duration times. The transesterification reaction was performed at a temperature below 49°C (between 40°C and 49°C, at atmospheric pressure in the presence of KOH and a 16-fold molar excess of alcohol in relation to the triglycerides (plant oils).

In the case of a reaction conducted using a process cavitator, under the same process conditions, it is possible to make use of a 13-fold molar excess of ethanol in relation to the triglycerides.

### Evaporation of unreacted alcohol

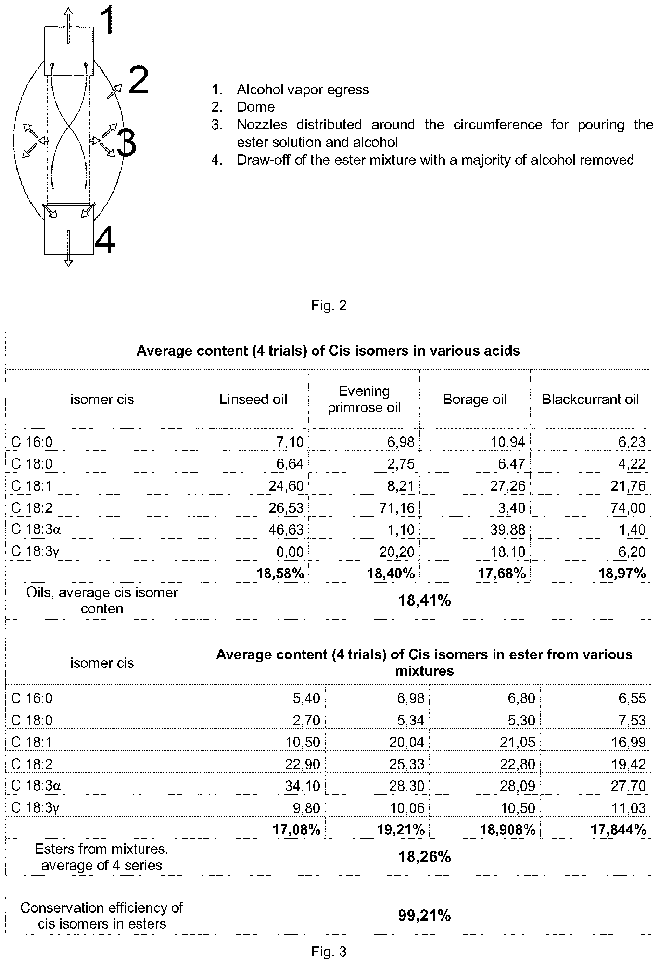

In order to evaporate off the unreacted alcohol, we made use of two thin-layer vacuum extractors connected cascade-wise. The first is responsible for drawing out a majority of anhydrous ethanol from the post-reaction mixture, and the second one extracts the remaining ethanol (at least partially as an azeotropic mixture with water) from the remaining mixture (from the second extractor)So that the evaporation process may proceed as quickly as possible at a temperature not exceeding 49°C and below 0.3 hours, we used spray nozzles (dome nozzles, axially perpendicular to the dome flow surface) with a vapour diffuser, which limits the transfer of droplets of the post-reaction mixture to the vapour egress on the condenser (Fig. 2),

### Ester phase separation

During the separation phase we made use of a 5-stage ester phase purification process, removing the remaining catalyst, soaps and glycerine, making use of:
- two-cascade short-term separators, which roughly separate the ester fraction from the glycerol fraction,
- a constant flow centrifuge which removes remainders of the suspended and emulsified glycerol fraction (purification). An example centrifuge is an Alfalaval model 105, using the following configuration:
   1. Solid disc at the first position (bottom)
   2. Purification module instead of diaphragm
- overnight separators, in which a nitrogen stream removes the remainders of alcohol, and at the same time the slow gravitational separation removes microquantities of the glycerol fraction present in the product. These separators produce a pure product.

Next, the product is directed into a second, clarifying centrifuge, for example Alfalaval (model 105) as configured below:
1. All discs have apertures
2. A diaphragm at the heavy fraction (selected in relation to media viscosity) from where it is transferred to the storage container (super-pure product).

The resulting oil mixture ethyl ester can be a product on its own, or else can be further processed (mixing with additional substances i.e. selenomethionin from *Yarrowia lipolytica,* coenzyme Q10, vitamins, etc.), and then apportioned and used as a dietary supplement with the above mentioned properties.

### Reclamation of the waste

Esterification waste resource reclamation (slimes, glycerol fraction, etc.) may be performed using *Yarrowia lipolytica* SKOTAN S.A 101 deposited in the IBPRS base under accession number KKP 2018 p according to a method described in Polish application P.383685.

Example 2. The composition of the finished product (cis- isomer content above 95% of the stock plant oils).

We measured the content of the cis- isomers in source oils and the mixture of ethyl esters constituting the finished product. We present the measurement results in Fig. 3.
An analysis of the results shows that the proposed method of producing a mixture of ethyl esters of unsaturated fatty acids makes it possible to retain at least 95% of the cis- isomers of unsaturated fatty acids contained in the natural triglycerides of the plants used in the production of the preparation. The esterification process of one litre of an oil mixture leads to the production of 1 litre of ethyl esters.

### Literature:

1- Zg 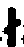 oszenie patentowe P-378114 pt. "Sposób wytwarzania estrów alkilowych wy 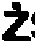 szych kwasów t 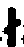 uszczowych"Zg 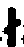 aszaj 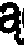 cy:Uniwersytet Wroc 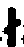 awski, Wroclaw; Kolodziej Hubert, Wroclaw; Vogt Andrzej, Wroclaw; Strzelecki Stanislaw, Wroclaw; Falat Jerzy, Nysa; Sowa, Wroclaw;
2- Zgloszenie patentowe P-386610 pt. "Sposób wytwarzania estrów etylowych lub metylowych wy 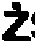 szych kwasów t 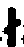 uszczowych oraz instalacji do jego wytwarzania"Zg 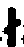 aszaj 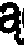 cy:Koodziej Hubert, Wroclaw; Vogt Andrzej, Wroc 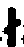 aw; Strzelecki; Steinmetz Grzegorz, Wroclaw;
3- Zgloszenie patentowe P-386608 pt. Sposób otrzymywania nienasyconych pochodnych wy 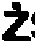 szych kwasów t 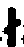 uszczowych oraz instalacji do realizacji tego sposobu; Zg 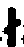 aszaj 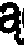 cy: Steinmetz Grzegorz, Wroclaw;
4- http://nowasol.olx.pl/leenlife-koncentrat-omega-3-6-9-iid-75671635
5- http://zookraina.pl/pl/p/SANOPET-OMEGA-3-6-9-NUTRACEUTYK-DLA-PSOW-I-KOTOW-120ml/6352
6- http://food-forum.pl/estry-etylowe/
7- http://www.termedia.pl/Artykul-pogladowy-Rola-kwasow-omega-3-w-ooptymalizacji-standardowej-farmakoterapii-w-prewencji-wtornej-choroby-wiencowej, 35, 12683
   1. Burr ML, Feihly AM, Gilbert JF i wsp. Effects of changes in fat, fish, and fibre intakes on death and myocardial reinfarction: diet and reinfarction trial (DART). Lancet 1989; 2: 757-761.
   2. He K, Song Y, Daviglus ML i wsp. Accumulated evidence on fish consumption and coronary heart disease mortality: a meta-analysis of cohort studies. Circulation 2004; 109: 2705-2711.
   3. Albert CM, Hennekens CH, O'Donnell CJ i wsp. Fish consumption and risk of sudden cardiac death. JAMA 1998; 279: 23-28.
   4. Burr ML, Ashfield-Watt PA, Dunstan FD i wsp. Lack of benefit of dietary advice to men with angina: results of controlled trial. Eur J Clin Nutr 2003; 57:193-200.
   5. Nilsen DW, Albreksten G, Landmark K i wsp. Effects of a high-dose concentrate of n-3 fatty acids or corn oil introduced early after an acute myocardial infarction on serum triacylglycerol and HDL cholesterol. Am J Clin Nutr 2001; 74: 50-56.
   6. Malasanos T, Stacpoole PW. Biological effects of omega-3 fatty acids in diabetes mellitus. Diabetes Care 1991; 14: 116-179.
   7. De Caterina R, Endres S, Kristensen SD, Schmidt EB. n-3 fatty acids and renal diseases. Am J Kidney Dis 1994; 24: 397-410.
   8. Knapp HR. Omega-3 fatty acids in respiratory diseases: a review. J Am Coll Nutr 1995; 14: 18-23.
   9. Galli C, Butrum R. Dietary omega-3 fatty acids and cancer: an overview. World Rev Nutr Diet 1991; 66: 446-461.
   10. De Caterina R, Basta G. n-3 fatty acids and the inflammatory response - biological bacground. Eur Heart J 2001; 3 (Suppl. D): D42-D49.
   11. Bang HU, Dyerberg J, Sinclair HM. The composition of the Eskimo food in north western Greenland. Am J Clin Nutr 1980; 33: 2657-2661.
   12. Mori TA, Beilin LJ, Burke V i wsp. Interactions between dietary fat, fish and fish oils and their effects on platelet function in men at risk of cardiovascular disease. Thromb Vasc Biol 1997; 17: 279-286.
   13. Kristensen SD, Iversen AM, Schmidt EB. Omega-3 polyunsaturated fatty acids and coronary thrombosis. Lipids 2001; 36: S79-S82.
   14. Lee KW, Blann AD, Lip GY. Effects of omega-3 polyunsaturated fatty acids on plasma indices of thrombogenesis and inflamation in patients post-myocardial infarction. Thromb Res 2006; 118: 305-312.
   15. Goodfellow J, Bellamy MF, Ramsey MW i wsp. Dietary supplementation with marine omega-3 fatty acids improve systemic large artery endothelial function in subjects with hypercholesterolemia. J Am Coll Cardiol 2000; 35: 265-270.
   16. Mori TA, Watts GF, Burke V i wsp. Differential effects of eicosapentaenoic acid and decosahexaenoic acid on vascular reactivity of the forearm microcirculation in hyperlipidemic, overweigh men. Circulation 2000;102: 1264-1269.
   17. Thies F, Garry JM, Yagoob P i wsp. Association of n-3 polyunsaturated fatty acids with stability of atherosclerotic plagues: a randomized controlled trial. Lancet 2003; 361: 477-485.
   18. Sacks FM, Stone PH, Gibson CM i wsp. Controlled trial of fish oil for regression of human coronary atherosclerosis. J Am Coll Cardiol 1995; 25:1492-1498.
   19. von Schacky C, Angerer P, Kothny W i wsp. The effect of dietary omega-3 fatty acids on coronary atherosclerosis. A randomized duble-blind, placebo controlled trial. Ann Intern Med 1999; 130: 554-562.
   20. O'Connor GT, Malenka DJ, Olmsted EM i wsp. A meta-analysis of randomized trials of fish oil in prevention of restenosis following coronary angioplasty. Am J Prev Med 1992; 8: 186-192.
   21. Gapinski JP, VanRuiswyk JV, Heudebert GR, Schectman GS. Preventing restenosis with fish oils following coronary angioplasty. A meta-analysis. Arch Intern Med 1993; 153: 1595-1601.
   22. Johansen O, Brekke M, Seljeflot I i wsp. N-3 fatty acids do not prevent restenosis after coronary angioplasty: results from the CART study. Coronary Angioplasty Restenosis Trial. J Am Coll Cardiol 1999; 33:1619-1626.
   23. Eritsland J, Arnesen H, Gr? nseth K i wsp. Effect of dietary supplementation with n-3 fatty acids on coronary artery bypass graft patency. Am J Cardiol 1996; 77: 31-36.
   24. Bhatnagar D, Durrington PN. Omega-3 fatty acids: their role in the prevention and treatment of atherosclerosis related risk factors and complications. Int J Clin Pract 2003; 57: 305-314.
   25. Mori TA, Woodman RJ. The independent effects of eicosapentaenoic acid and decosahexaenoic acid on cardiovascular risk factors in humans. Curr Opin Clin Nutr Metab Care 2006; 9: 95-104.
   26. Mori TA. Omega-3 fatty acids and hypertension in humans. Clin Exp Pharmacol Physiol 2006; 33: 842-846.
   27. Bronsgeest-Schoute HC, von Gent CM, Luten JB, Ruiter A. The effect of various intakes of omega-3 fatty acids on the blood lipid composition in healthy human subjects. Am J Clin Nutr 1981; 34: 1752-1757.
   28. Fehily AM, Burr ML, Phillips KM, Deadman NM. The effect of fatty fish on plasma lipid and lipoprotein concentrations. Am J Clin Nutr 1983; 38: 349-351.
   29. Harris WS. n-3 fatty acids and serum lipoproteins: human studies. Am J Clin Nutr 1997; 65 (5 Suppl.): 1645S-54S.
   30. Harris WS. Omega-3 long-chain PUFA and trigliceride lowering minimum effective intakes. Eur Heart J 2001; 3 (Suppl. D): D59-D61.
   31. Karpe F, Steiner G, Uffelman K i wsp. Postprandial lipoproteins and progression of coronary atheroslerosis. Atheroslerosis 1994; 106: 83-97.
   32. Yokoyama M, Origasa H, for the JELIS investigators. Effects of eicosapentaenoic acid on cardiovascular events in Japanese patients with hypercholesterolemia: rationale, design, and baseline characteristics of the Japan EPA Lipid Intervention Study (JELIS). Am Heart J 2003; 146: 613-620.
   33. Davidson MH, Stein EA, Bays HE, i wsp. for the COMBination of prescription omega-3 with simvastation (COMBOS) investigators. Efficacy and tolerability of adding prescription omega-3 fatty acids 4 g/d to simvastatin 40 mg/d in hypertriglyceridemic patients: an 8-week, randomized, double-blind, placebo-controlled study. Clin Ther 2007; 29: 1354-1367
   34. Mackness MJ, Bhatnagar D, Durrington PN i wsp. Effect of a view fish oil concentrate on plasma lipids and lipoproteins in patients with hypertriglyceridaemia. Eur J Clin Nutr 1994; 48: 859-865.
   35. Kang JX, Leaf A. Effects of long-chain polyunsaturated fatty acids on the contraction of neonatal rat cardiac monocytes. Proc Natl Acad Sci USA 1994; 91: 9886-9890.
   36. Li Y, Kang JX, Leaf A. Differential effects of various eicosanoids on the production or prevention of arrythmias in cultured neonatal rat cardiac myocytes. Prostaglandis 1997; 54: 511-530.
   37. Xiao YF, Kang JX, Morgan JP, Leaf A. Blocking effects polyunsaturated fatty acids on Na+ channels of neonatal rat ventricular myocytes. Proc Natl Acad Sci USA 1995; 92: 11000-11004.
   38. Xiao YF, Gomez AM, Morgan JP i wsp. Suppresion of voltage-gated L-type Ca2+ currents by polyunsaturated fatty acids in adult and neonatal rat cardiac myocytes. Proc Natl Acad Sci USA 1997; 94: 4182-4187.
   39. Leaf A. The elektrophysiological basis for the antiarrhytmic action of polyunsaturated fatty acids. Eur Heart J 2001; 3 (Suppl. D): D98-D105.
   40. Mozaffarian D, Stein PK, Prineas RJ i wsp. Dietary fish and omega-3 fatty acid consumption and heart rate variability in US adults. Circulation 2008; 117: 1130-1137.
   41. Billman GE, Kang JX, Leaf A. Prevention of sudden cardiac death by dietary pure omega-3 polyunsaturated fatty acids in dogs. Circulation 1999; 99: 2452-2457.
   42. Schrepf R, Limmert T, Claus Weber P i wsp. Immediate effects of n-3 fatty acid infusion on the induction of sustained ventricular tachycardia. Lancet 2004; 363: 1441-1442.
   43. Calo' L, Bianconi L, Colivicchi F i wsp. N-3 fatty acids for the prevention of atrial fibrillation after coronary artery bypass surgery. J Am Coll Cardiol 2005; 45: 1723-1728.
   44. Raitt MH, Connor WE, Morris C i wsp. Fish oil supplementation and risk of ventricular tachycardia and ventricular fibrillation in patients with implantable defibrillators. JAMA 2005; 93: 884-891.
   45. Brouwer IA, Zock PL, Camm AJ i wsp. Effect of fish oil on ventricular tachyarrhythmia and death in patients with implantable cardioverter defibrillators: the Study on Omega-3 Fatty Acids and Ventricular Arrhythmia (SOFA) randomized trial. JAMA 2006; 295: 2613-2619.
   46. Leaf A, Albert CM, Josephson M i wsp. Prevention of fatal arrhythmias in high-risk subjects by fish oil n-3 fatty acid intake. Circulation 2005; 112: 2762-2768.
   47. Wilhelm M, Tobias R, Asskali F i wsp. Red blood cell omega-3 fatty acids and the risk of ventricular arrhytmias in patients with heart failure. Am Heart J 2008;155: 971-977.
   48. Marchioli R, Barzi F, Bomba E i wsp. Early protection against sudden death by n-3 polyunsaturated fatty acids after myocardial infarction. Time - course analysis of the results of the Gruppo Italiano per lo Studio della Supravvivenza nell' Infarcto Miocardico (GISSI) - Prevenzione. Circulation 2002; 105: 1897-1903.
   49. GISSI-HF investigators: Effect of n-3 polyunsaturated fatty acids in patients with chronic heart failure (the GISSI-HF trial): a randomised; double-blind, placebo-controlled trial. www.thelancet.com (August 31,2008).
   50. Hooper L, Thompson RL, Harrison RA i wsp. Risks and benefits of omega 3 fats for mortality, cardiovascular disease, and cancer: systemic review. BMJ 2006; 332: 752-760.
   51. Bucher HC, Hengstler P, Schindler C, Meier G. N-3 polyunsaturated fatty acids in coronary heart disease: a meta-analysis of randomized controlled trial. Am J Med 2002; 112: 298-304.
   52. Wagner D, Rupp H, Schule LM, Maisch B. Risk stratification by the 'EPA+DHA level' and the 'EPA/AA ratio' focus on anti-inflammatory and antiarrhythmogenic effects of long-chain omega-3 fatty acids. Herz 2004; 29: 673-685.
   53. Smith SC Jr, Allen J, Blair SN i wsp. AHA/ACC guidelines for secondary prevention for patients with coronary and other atherosclerotic vascular disease: 2006 update: endorsed by the National Heart, Lung, and Blood Institute. Circulation 2006; 113: 2363-2372.
   54. Secondary prevention in primary and secondary care for patients following a myocardial infarction NHS. www.nice.org.uk
   55. Messerli FH, Mancia G, Conti CR, Pepine CJ. Guidelines on the management of stable angina pectoris: executive summary. The task force on the management of stable angina pectoris of the European Society of Cardiology. Eur Heart J 2006; 27: 1341-1381.
   56. Van de Werf F, Bax J, Betriu A i wsp. Management of acute myocardial infarction in patients presenting with ST-segment elevation. The task force on the management of acute myocardial infarction of the European Society of Cardiology. Eur Heart J 2003; 24: 28-66.
   57. Fuster V, Rydén LE, Cannom DS i wsp. ACC/AHA/ESC 2006 guidelines for management of patients with ventricular arrhythmias and the prevention of sudden cardiac death - executive summary. Eur Heart J 2006; 27: 2099-2140.

## Claims

1. A method of producing a mixture of ethyl esters of plant fatty acids with a high content of cis- isomers of unsaturated fatty acids, **characterised in that**:
a. a mixture of plant oils using a flow cavitation technique is obtained, wherein the cavitation is conducted in a flow cavitator possessing from 3 to 8 cavitation zones,
b. the resulting mixture is used as a feedstock in the transesterification reaction with ethanol, wherein the transesterification is conducted in presence of a catalyst at a temperature below 49°C, at atmospheric pressure and in a molar excess of alcohol in relation to triglycerides, preferably from 13- to 16-fold,
c. after completing the transesterification reaction, ethanol is evaporated out of the reaction mixture, wherein the evaporation process is conducted at a temperature not exceeding 49°C, over a time below 0.3 hours, preferably in a dome extractor equipped with spray nozzles with vapour diffusers,
d. the ester phase is separated off and purified, particularly of the remaining catalyst, soaps and glycerine, and then the mixture of ethyl esters of plant fatty acids with a high content of cis- isomers of unsaturated fatty acids is clarified.

2. A method of according to Claim 1, **characterised in that** the transesterification reaction is conducted using a classical method with a 16-fold excess of ethanol or in in a flow-through process cavitator, in a 13-fold excess of ethanol.

3. A method of according to Claim 1, **characterised in that** in the transesterification reaction uses KOH as a catalyst.

4. A mixture of ethyl esters of plant fatty acids, obtainable by the method according to claim 1, containing cis-isomers of omega fatty acids in an amount of no less than 95% of the initial cis-isomer content of unsaturated omega 3, omega 6 or omega 9 fatty acids in the plant oil used to produce the esters, wherein said mixture of ethyl esters is produced from mixture of plant oils with the following composition:
- night primrose oil (*Oenothera L.*) from 1% to 30 %,
- borage oil (*Borago officinalis L.*) from 1 % to 30 %,
- blackcurrant seed oil (*Ribes nigrum L.*) from 1 % to 10 %,
- linseed oil (*Linum L.*) to 100 % by mass.

## Patentansprüche

1. Verfahren zur Herstellung eines Gemischs von Ethylestern von Pflanzenfettsäuren mit einem hohen Gehalt an cis-Isomeren von ungesättigten Fettsäuren, **dadurch gekennzeichnet, dass**:
a. ein Gemisch von Pflanzenölen mit Hilfe einer Strömungskavitationstechnik erhalten wird, wobei die Kavitation in einem Strömungskavitator durchgeführt wird, der 3 bis 8 Kavitationszonen besitzt;
b. das resultierende Gemisch als Einsatzmaterial in der Umesterungsreaktion mit Ethanol verwendet wird, wobei die Umesterung in Gegenwart eines Katalysators bei einer Temperatur unter 49 °C unter Atmosphärendruck und in einem molaren Überschuss von Alkohol in Bezug auf Triglyceride, vorzugsweise einem 13- bis 16-flachen, durchgeführt wird;
c. nach Beendigung der Umesterungsreaktion Ethanol aus dem Reaktionsgemisch verdampft wird, wobei der Verdampfungsvargang bei einer Temperatur von nicht mehr als 49 °C über eine Zeit von weniger als 0,3 Stunden durchgeführt wird, vorzugsweise in einem Kuppelextraktor, der mit Sprühdüsen mit Dampfdiffusoren ausgestattet ist;
d. die Esterphase abgetrennt und gereinigt wird, insbesondere von dem übrigen Katalysator, Seifen und Glycerin, und dann das Gemisch von Ethylestern von Pflanzenfettsäuren mit einem hohen Gehalt an cis-Isomeren von ungesättigten Fettsäuren geklärt wird.

2. Verfahren gemäß Anspruch 1, **dadurch gekennzeichnet, dass** die Umesterungsreaktion mit Hilfe eines klassischen Verfahrens mit einem 16-fachen Überschuss an Ethanol oder in einem Durchflussprozesskavitator in einem 13-flachen Überschuss an Ethanol durchgeführt wird.

3. Verfahren gemäß Anspruch 1, **dadurch gekennzeichnet, dass** in der Umesterungsreaktion KOH als Katalysator verwendet wird.

4. Gemisch von Ethylestern von Pflanzenfettsäuren, das nach dem Verfahren gemäß Anspruch 1 erhältlich ist und cis-Isomere von Omegafettsäuren in einer Menge von nicht weniger als 95% des Anfangsgehalts des cis-isomers an ungesättigten Omega-3-, Omega-6- oder Omega-9-Fettsäuren in dem zur Herstellung der Ester verwendeten Pflanzenöl enthält, wobei das Gemisch von Ethylestern aus einem Gemisch von Pflanzenölen mit der folgenden Zusammensetzung hergestellt wird:
- Nachtkerzenöl (*Oenothera* L.) von 1 bis 30%;
- Borretschöl (*Borago officinalis* L.) von 1 bis 30%;
- Samenöl der schwarzen Johannisbeere (*Ribes nigrum* L.) von 1 bis 10%;
- Leinsaatöl (*Linum* L.) auf 100 Massen-%.

## Revendications

1. Procédé de production d'un mélange d'esters éthyliques d'acides gras végétaux avec une teneur élevée en isomères cis d'acides gras insaturés, **caractérisé en ce que** :
a. un mélange d'huiles végétales au moyen d'une technique de capitation à écoulement est obtenu, dans lequel la cavitation est opérée dans un cavitateur à écoulement possédant de 3 à 8 zones de cavitation,
b. le mélange résultant est utilisé comme une charge d'alimentation dans la réaction de transestérification avec de l'éthanol, dans lequel la transestérification est opérée en la présence d'un catalyseur à une température inférieure à 49 °C, à la pression atmosphérique et dans un excès molaire d'alcool par rapport aux triglycérides, de préférence, de 13 à 16 fois,
c. après achèvement de la réaction de transestérification, l'éthanol est évaporé du mélange de réaction, dans lequel le processus d'évaporation est opéré à une température ne dépassant pas 49 °C sur un temps inférieur à 0,3 heure, de préférence dans un extracteur à dôme équipé de buses de pulvérisation avec des diffuseurs de vapeur,
d. la phase ester est séparée et purifiée, en particulier du catalyseur résiduel, des savons et de la glycérine, et puis le mélange d'esters éthyliques d'acides gras végétaux avec une teneur élevée en isomères cis d'acides gras insaturés est clarifié.

2. Procédé selon la revendication 1, **caractérisé en ce que** la réaction de transestérification est opérée au moyen d'un procédé classique avec 16 fois plus d'éthanol ou dans un cavitateur de traitement à écoulement continu, dans 13 fois plus d'éthanol.

3. Procédé selon la revendication 1, **caractérisé en ce que** la réaction de transestérification utilise du KOH en tant que catalyseur.

4. Mélange d'esters éthyliques d'acides gras végétaux, susceptible d'être obtenu par le procédé selon la revendication 1, contenant des isomères cis d'acides gras oméga dans une quantité de pas moins de 95 % de la teneur en isomère cis initial d'acides gras insaturés oméga 3, oméga 6 ou oméga 9 dans l'huile végétale utilisée pour produire les esters, dans lequel ledit mélange d'esters éthyliques est produit à partir d'un mélange d'huiles végétales avec la composition suivante :
- huile d'onagre (*Oenothera L.*) de 1 % à 30 %,
- huile de bourrache (*Borago officinalis L.*) de 1 % à 30 %,
- huile de pépins de cassis (*Ribes nigrum L.*) de 1 % à 10 %,
- huile de lin (*Linum L.*) jusqu'à 100 % en masse.
